# EUROPÄISCHE PATENTANMELDUNG

(11) **EP 2 704 287 A1**
(43) Veröffentlichungstag der Anmeldung: **05.03.2014**
(21) Anmeldenummer: 12181868.6
(22) Anmeldetag: 27.08.2012
(51) Int. Cl.: H02J 7/00, H01M 10/42

(54) **Zuschaltbare Ladungsausgleichsschaltung**

(71) Anmelder: Magna E-Car Systems GmbH & Co OG, 8041 Graz (AT)
(72) Erfinder: Dämon, Peter, 8301 Laßnitzhöhe (AT)
(74) Vertreter: Rausch, Gabriele

(57) **Zusammenfassung**

Eine Ladungsausgleichsschaltung für Batteriesysteme besteht aus jeweils einer Zenerdiode und einem Widerstand, die parallel zu einer Batteriezelle angeordnet sind, wobei die Ausgleichsschaltung über einen Schalter mit der jeweiligen Batteriezelle verbunden ist. Dadurch ist die Schaltung nicht zu Nachteil des Ladezustands des Batteriesystems permanent mit den Batteriezellen verbunden.

## Beschreibung

Es wird eine Ladungsausgleichsschaltung für Batteriesysteme vorgeschlagen, die aus jeweils einer Serienschaltung einer Zenerdiode und einem Widerstand besteht, die jeweils parallel zu einer Batteriezelle angeordnet sind, wobei die parallele Ladungsausgleichsschaltung über einen Schalter mit der jeweiligen Batteriezelle verbunden ist. Dadurch ist die Schaltung nicht zum Nachteil des Ladezustands des Batteriesystems permanent mit den Batteriezellen verbunden.

### Stand der Technik

Lithium-Ionen-Batterien sind in vielen Anwendungsgebieten der Technik zu den bevorzugten Energiespeichern geworden. Gerade auch im automobilen Umfeld ist die hohe Energiespeicherdichte der Li-Ionen-Batterien das ausschlaggebende Element.

Im praktischen Einsatz von mehrzelligen Li-Ionen-Batteriesystemen hat sich herausgestellt, dass die einzelnen Zellen im Betrieb unterschiedliche Ladungszustände und somit Spannungslagen einnehmen. Somit erreichen in Reihe geschaltete Zellen beim gemeinsamen Laden nicht die gleiche Lade-Endspannung.

Da Lithium-Ionen-Zellen empfindlich gegen Überladung, z.B. Zellenspannung größer 4,2 V, und Tiefentladung, Zellenspannung unter etwa 2,75 V, sind, empfiehlt es sich die Zellen beim Laden einzeln zu kontrollieren. Dazu werden bei mehrzelligen Batteriesystemen für jede Zelle separate Anschlüsse bereitgestellt, die das Überwachen der Zellspannungen und das kontrollierte Laden und/oder Entladen jeder einzelnen Zelle zum Zwecke des Ladungsausgleich (Balancing) gestatten.

Bei größeren Batterien, beispielsweise in Traktionsbatterien von Elektro- oder Hybridfahrzeugen ist der Ladungsausgleichsregler Teil eines Batteriemanagementsystems (BMS).

Das Batteriemanagementsystem ist eine elektronische Schaltung, welche zur Überwachung, Steuerung und oder Regelung eines nachladbaren Batteriesystems dient. Das BMS soll dabei unter anderem die unvermeidbaren fertigungsbedingten Streuungen verschiedener Parameter der Zellen, etwa Kapazität und Leckströme, erkennen, überwachen und ausgleichen.

Diese Ausgleichsschaltungen sind aufwändig und lohnen sich nur für komplexe Batteriesysteme. Bei günstigeren und einfacheren Batteriesystemen mit geringer Zellenzahl und geringer Nennspannung wird häufig keine Ladungsausgleichsschaltung vorgesehen. Solche Batteriesysteme werden z.B. in Elektrozweirädern verwendet. Der Nachteil von Batteriesystemen ohne Ladungsausgleichsschaltung liegt in der durch die unausgeglichenen Ladungszustände der einzelnen Batteriezellen bedingten Verminderung der Kapazität des gesamten Batteriesystems. Dieser Effekt wird als zusätzliche Alterung wahrgenommen.

Auch für Testzwecke von einzelnen Modulen oder eines Untersystems von Batteriemodulen ist zumeist eine Ladungsausgleichsschaltung notwendig. Daher ist bei Testanwendungen ein aufwändiges Anpassen der Ladungsausgleichsschaltung des Gesamtsystems notwendig, oder jede Zelle muss einzeln manuell angeglichen werden.

Aus der DE102010038882 ist eine einfache Schaltung für ein Ausgleichsmodul bekannt, die den Ladevorgang optimiert. Dabei werden Zenerdioden parallel zu einem Batteriemodulsystem betrieben.

Während des Ladevorgangs können keine Überspannungen in einer Batteriezelle auftreten, da der Widerstand der Schaltung mit zunehmender Spannung exponentiell kleiner wird. Bei einem Entladevorgang ist der Widerstand der im Stand der Technik eingesetzten Zenerdiode im Vergleich zum Innenwiderstand der Batteriezelle so hoch dimensioniert, dass ein Entladestrom vollständig über die Batteriezelle fließt. Die vorgestellte Schaltung hat den Nachteil, dass sie als Überladeschutz optimiert ist. Eine gleichmäßige Entladung der Batteriezellen ist dabei nicht Ziel der Schaltung.

Es ist daher Aufgabe der Erfindung ein Ausgleichssystem für Batteriesysteme zu schaffen, das ohne komplexe Steuerung und oder Regelung einen möglichst gleichmäßigen Ladungszustand zwischen den einzelnen Batteriezellen herbeiführt. Es ist von Vorteil eine Ladungsausgleichsschaltung für Batteriezellen, die aus jeweils einer Zenerdiode und einem Widerstand besteht, zu schaffen, die parallel zu jeweils einer Batteriezelle angeordnet ist, wobei die parallele Ladungsausgleichsschaltung über eine zuschaltbare Verbindung mit der jeweiligen Batteriezelle verbunden ist.

Es ist für eine einfache Ausgestaltung von Vorteil wenn der Schalter manuell betätigbar ist

Eine weitere vorteilhafte Ausführungsform der Ladungsausgleichsschaltung umfasst die Funktion, dass der Schalter automatisch geschlossen wird.

Eine weitere vorteilhafte Ausführungsform ist, wenn der Schalter als Steckverbindung ausgeführt ist. Dadurch wird ermöglicht, dass die Ausgleichschaltung in einem getrennten Ausgleichsschaltungsmodul untergebracht ist.

### Beschreibung der Erfindung

Die Erfindung wird anhand der Figuren im Weiteren näher erläutert und beschrieben.

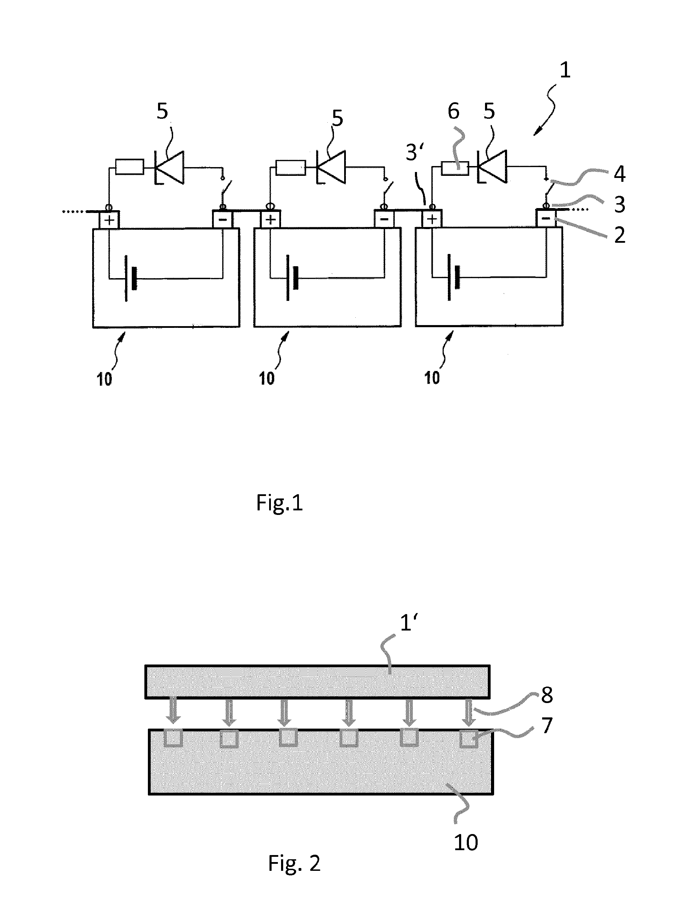

Es zeigt Figur 1 ein Schema der Erfindung,
Figur 2 die erfindungsgemäßen Module
Figur 3 zeigt die Schaltung der Modullösung.

Figur 1 zeigt drei Batteriezellen 10, deren jeweilige Batteriepole 2 jeweils mit einem Batteriepol 2 der nächsten Batteriezelle 10 verbunden sind. Dabei ist jeweils ein positiver Batteriepol 2 mit einem negativen Batteriepol der nächsten Batteriezelle 10 leitend kontaktiert. Die Verbindung ist in der Zeichnung schematisch als Brücke dargestellt, aber es kann jede andere geeignete Verbindung zwischen den Batteriezellen verwendet werden. Die Anzahl der Batteriezellen ist dabei nicht auf die dargestellten drei Batteriezellen eingeschränkt. Die Ladungsausgleichsschaltung ist besonders dann sinnvoll, wenn sie in kleinen Gruppen von Batteriezellen angewendet wird. Die Anzahl der Batteriezellen in einer möglichen vorteilhaften Anwendungsgröße bewegt sich zwischen 2 und 50 Zellen, was für den Einsatz in kleineren Fahrzeugen und Zweirädern, sowie für verschiedenste mobile Maschinen ausreichend ist, aber den Einsatz eines vollständigen Batteriemanagementsystems aus Kostengründen noch nicht sinnvoll erscheinen lässt.

In der Figur 1 oberhalb der Batteriezellen 10 angeordnet, befindet sich über jeweils einer Batteriezelle jeweils ein Teil der Ladungsausgleichsschaltung 1. Die Ladungsausgleichsschaltung 1 besteht dabei aus einem ersten Kontakt 3, der den negativen Batteriepol 2 kontaktiert. Weiterhin weist die Schaltung einen Schalter 4 auf. Eine Zenerdiode 5 ist im weiteren Verlauf der elektrischen Verbindung mit einem Widerstand 6 verbunden, der wiederum in Kontakt mit einem positiven Batteriepol 3' steht.

Die Positionierung des Schalters 4, der Zenerdiode 5 und des Widerstandes 6 in Figur 1 stellt dabei eine mögliche Ausführungsform dar. Der Schalter 4, die Zenerdiode 5 und der Widerstand 6 kann in jeder Reihenfolge der Ausgleichsschaltung angebracht sein.

Die Kontaktierung der Ladungsausgleichsschaltung 1 erfolgt direkt oder indirekt über Zellverbinder, Spannungsüberwachungsabgriffe oder Zuleitungen die am gleichen Potential liegen.

Diese einfache Anordnung mit jeweils einem Schalter 4 wiederholt sich parallel zu jeder Batteriezelle 10. Durch die Integration des Schalters 4 in die parallele elektrische Schaltung 1 ist die Kombination aus Zenerdiode und Widerstand parallel zur jeweiligen Batteriezelle 10 zuschaltbar ausgelegt. Die Zuschaltbarkeit der Ausgleichschaltung 1 ermöglicht es, die Schaltung zu zuschalten, wenn der Benutzer dieses wünscht. Diese Ausführung der Ladungsausgleichsschaltung 1 ist von Vorteil, wenn die Ladungsausgleichsschaltung ein integraler Bestandteil des Batteriesystems ist.

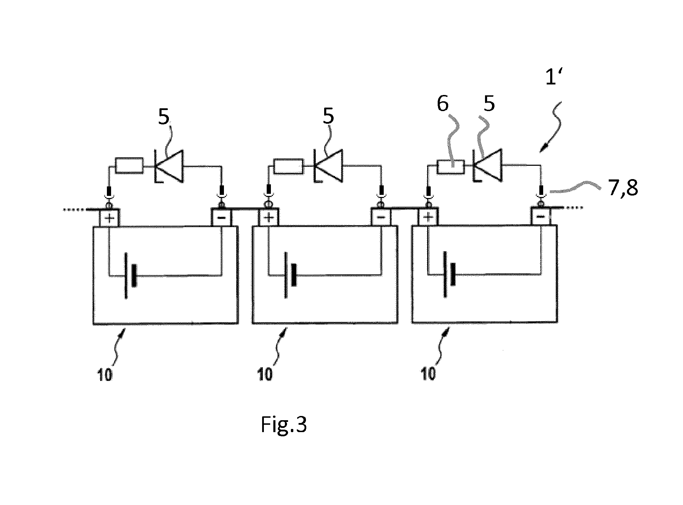

Figur 2 und 3 zeigten eine weitere Ausführungsform des vorgeschlagenen Ausgleichsystems. Die Ladungsausgleichsschaltung 1 ist dabei getrennt als eigenständiges Ausgleichsschaltungsmodul 1' aufgebaut. Die Batteriezellen 10 sind schematisch in Figur 2 als ein Block dargestellt. Über die Komponenten 7 und 8 wird ebenfalls schematisch eine Steckverbindung zwischen dem Ausgleichsschaltungsmodul 1' und den Batteriezellen 10 dargestellt. In dieser Ausführung werden die Schalter als Steckverbindungen ausgeführt. Die Steckverbindung ist dabei eine Möglichkeit, ein Batteriesystem während der Wartung über das Ausgleichsschaltungsmodul 1' einem Ladungsausgleich zu unterziehen.

Diese Ausführung ist von Vorteil, wenn die Ausgleichschaltungen als eigenständiges Ausgleichsschaltungsmodul 1' nur für die Dauer des Ausgleichsvorganges an das Batteriesystem angeschlossen werden.

Überschreitet die Zellspannung die Zenerspannung, so fließt über die Zenerdiode 5 ein Strom, der über den Spannungsabfall an der Zenerdiode 5 und am Entladewiderstand 6 abgebaut wird. Unterschreitet die Zellspannung die Zenerspannung, so sperrt die Zenerdiode den Stromfluss.

Wird diese Ladungsausgleichsschaltung 1 an jeder Zelle angeordnet, so werden alle Zellen bis zur Zenerspannung entladen. Dadurch werden Unterschiede im Ladungszustand einzelner Batteriezellen ausgeglichen. Besonders geeignet ist die Schaltung für Lithium-Ionen-Zellen. Bei dieser Art von Batteriezellen fällt die Zellspannung bei geringem Ladungsinhalt sehr stark ab. Wählt man die Zenerspannung so, dass der Ladungsausgleich in diesem Spannungsbereich mit geringem Ladungsinhalt erfolgt, so führt die relativ hohe Toleranz der Zenerspannung zu einer akzeptablen Toleranz im Ladungsausgleich. Die Zenerspannung muss so gewählt werden, dass trotz aller Toleranzen die minimal zulässige Zellspannung der Batteriezellen nicht unterschritten wird. Um durch Fehlbedienungen Zerstörungen der Bauteile zu vermeiden, kann die Zenerdiode und der Entlade-Widerstand so dimensioniert sein, dass selbst bei einer Zuschaltung im vollen Ladezustand keine Zerstörung der Komponenten erfolgt. Gemäß einer weiteren vorteilhaften Ausführungsform ist die Zenerspannung so gewählt, dass sie im Bereich der Zellspannung bei einem hohen Ladungszustand liegt. Bei Lithium-Ionen-Zellen steigt die Zellspannung bei hohem Ladungszustand stark an. So führt auch in dieser Ausführungsform die relativ hohe Toleranz der Zenerspannung zu einer akzeptablen Toleranz im Ladungsausgleich.

Die Ladungsausgleichsschaltung ist zu den Batteriezellen zuschaltbar, da die Zellen ansonsten kontinuierlich über den Widerstand 6 entladen werden würden. Das Zuschalten kann entweder durch manuelle oder elektronische Schalter erfolgen oder durch Steckverbindungen, mit denen ein ganzes Ausgleichschaltungsmodul verbunden wird.

Allerdings ist es auch sinnvoll, eine automatisierte Variante der Zuschaltung zu nutzen, in der eine Zuschaltung des Ausgleichsystems nur dann erfolgen kann, wenn der Ladezustand des Batteriesystems eine bestimmte Schwelle überschreitet.

Die Bestimmung des Parameters, der die Zuschaltung erlaubt, kann über eine einfache Messung an einem gesamten Batteriesystem oder an einzelnen Batteriezellen über einen Ladezustandssensor erfolgen.

Dabei wird der Ladezustand, beispielsweise durch Ermittlung der Systemspannung ermittelt. Es ist aber auch möglich den Ladezustand anhand einer oder mehreren repräsentativen Batteriezellen zu ermitteln und daraus den Parameter zur Aktivierung der Ladungsausgleichsschaltung abzuleiten.

Bei der automatisierte Variante wird statt einem einfachen manuellen Schalter ein intelligenter Schalter eingesetzt, der nur dann betätigt wird, wenn der Messwert die eingestellte Schwelle überschreitet.

Besonders bei der Ausführungsform, in der die Zenerspannung im Bereich der Zellspannung mit hohem Ladungszustand gewählt ist, ist ein automatisches Zuschalten ab Überschreitung eines Schwellwerts vorteilhaft. Beispielsweise wird nach Abschluss eines Ladevorgangs die Ladungsausgleichschaltung 1 zugeschaltet, falls die Spannung zumindest einer Zelle den eingestellten Schwellwert überschreitet.

### Legende

| | |
|---|---|
| 1 Ausgleichschaltung | 5 Zenerdiode |
| 1' Ausgleichsschaltungsmodul | 6 Widerstand |
| 2 Batteriepol | 7, 8 Steckverbindung |
| 3, 3' Kontakt | 10 Batteriezelle |
| 4 Schalter | |

## Patentansprüche

1. Ladungsausgleichsschaltung für Batteriezellen (10), die aus jeweils einer Zenerdiode (5) und einem Widerstand (6) besteht, die jeweils parallel zu einer Batteriezelle (10) angeordnet sind, **dadurch gekennzeichnet, dass** die parallele Ladungsausgleichsschaltung (1) über unterbrechbare Verbindungen (4) mit der jeweiligen Batteriezelle zu verbinden ist.

2. Ladungsausgleichsschaltung nach Anspruch 1, **dadurch gekennzeichnet, dass** die unterbrechbare Verbindung ein manuell betätigbarer Schalter (4) ist.

3. Ladungsausgleichsschaltung nach Anspruch 4, **dadurch gekennzeichnet, dass** die unterbrechbare Verbindung ein automatisch schließbarer Schalter (4) ist.

4. Ausgleichschaltung nach Anspruch 1, **dadurch gekennzeichnet dass** die unterbrechbare Verbindung (4) mit einem Ladezustandssensor verbunden ist.

5. Ausgleichschaltung nach Anspruch 2 oder 3, **dadurch gekennzeichnet, dass** der Schalter (4) nur dann betätigbar ist, wenn der Ladezustand mindestens einer Batteriezelle (10) oberhalb eines Schwellwertes ist.

6. Ausgleichschaltung nach Anspruch 1, **dadurch gekennzeichnet, dass** die Ladungsausgleichsschaltung (1) in einem getrennten Ausgleichsschaltungsmodul (1') untergebracht ist.

7. Ladungsausgleichsschaltung nach Anspruch 1, **dadurch gekennzeichnet, dass** das Ausgleichsschaltungsmodul (1') über Steckverbindungen (8, 7) mit den Batteriezellen (10) verbindbar ist.

8. Ausgleichschaltung nach Anspruch 1, **dadurch gekennzeichnet, dass** die Ladungsausgleichsschaltung (1) eine Steuerung umfasst, die einen Ladungsschwellwert misst und die Ladungsausgleichsschaltung in Abhängigkeit des Schwellwertes aktiviert.

9. Ausgleichsschaltung nach Anspruch 1, **dadurch gekennzeichnet, dass** die Zenerspannung einer Zellspannung im geringen Ladezustand entspricht.

10. Ausgleichsschaltung nach Anspruch 1, **dadurch gekennzeichnet, dass** die Zenerspannung einer Zellspannung im hohen Ladezustand entspricht.

11. Verfahren zum Ausgleich des Entladezustandes von Li-lonen-Batteriezellen, wobei die Entladung mit mindestens einer parallel zur Batteriezelle angebrachten Zenerdiode (5) mit Widerstand so gesteuert wird, dass der Entladestrom bis zum Erreichen der Zenerspannung fließt und darunter die Entladung unterbrochen wird.

## Geänderte Patentansprüche

### Geänderte Patentansprüche gemäss Regel 137(2) EPÜ.

**1.** Ladungsausgleichsschaltung für Batteriezellen (10), die aus jeweils einer Zenerdiode (5), wobei die Kathode über einen Widerstand (6) mit dem positiven Pol, die Anode mit dem negativen Pol der Batteriezelle (10) verbunden ist, und wobei die Zenerdiode in Reihe mit dem Widerstand parallel zur jeweiligen Batteriezelle (10) angeordnet ist, **dadurch gekennzeichnet, dass** die parallele Ladungsausgleichsschaltung (1) über mindestens eine physikalisch unterbrechbare Verbindung (4, 7, 8) mit der jeweiligen Batteriezelle (10) zu verbinden ist.

**2.** Ladungsausgleichsschaltung nach Anspruch 1, **dadurch gekennzeichnet, dass** die mindestens eine unterbrechbare Verbindung mit einem manuell betätigbarer Schalter (4) unterbrechbar ist.

**3.** Ladungsausgleichsschaltung nach Anspruch 1, **dadurch gekennzeichnet, dass** die mindestens eine unterbrechbare Verbindung mit einem automatisch schließbareren Schalter (4) unterbrechbar ist.

**4.** Ausgleichschaltung nach Anspruch 1, **dadurch gekennzeichnet dass** die unterbrechbare Verbindung (4) mit einem Ladesensor verbunden ist.

**5.** Ausgleichschaltung nach Anspruch 2 oder 3, **dadurch gekennzeichnet, dass** der Schalter (4) nur dann betätigbar ist, wenn der Ladezustand mindestens einer Batteriezelle (10) unterhalb eines Schwellwertes sinkt.

**6.** Ausgleichschaltung nach Anspruch 1, **dadurch gekennzeichnet, dass** die Ladungsausgleichsschaltung (1) in einem von den Batteriemodulen (10) getrennten Ausgleichsschaltungsmodul (1') untergebracht ist.

**7.** Ladungsausgleichsschaltung nach Anspruch 1, **dadurch gekennzeichnet, dass** das Ausgleichsschaltungsmodul (1') über Steckverbindungen (8, 7) mit den Batteriezellen (10) verbindbar ist.

**8.** Ausgleichschaltung nach Anspruch 1, **dadurch gekennzeichnet, dass** die Ladungsausgleichsschaltung (1) eine Steuerung umfasst, die einen oberen und unteren Ladungsschwellwert misst und die Ladungsausgleichsschaltung nur zwischen den beiden Schwellwerten zur Batteriezelle verbindet.

**9.** Ausgleichsschaltung nach Anspruch 1, **dadurch gekennzeichnet, dass** die Zenerspannung der Zenerdiode einer Zellspannung im geringen Ladezustand entspricht.

**10.** Ausgleichsschaltung nach Anspruch 1, **dadurch gekennzeichnet, dass** die Zenerspannung einer Zellspannung im hohen Ladezustand entspricht.

**11.** Verfahren zum Ausgleich des Entladezustandes von Li-lonen-Batteriezellen, wobei die Entladung mit mindestens einer parallel zur Batteriezelle angebrachten Zenerdiode (5) gesteuert wird, wobei die Kathode der Zenerdiode über einen Widerstand (6) mit dem positiven Pol, die Anode mit dem negativen Pol der Batteriezelle (10) verbunden ist, und wobei die Zenerdiode in Reihe mit dem Widerstand parallel zur jeweiligen Batteriezelle (10) angeordnet ist, so dass der Entladestrom bis zum Erreichen der Zenerspannung
fließt und darunter die Entladung unterbrochen wird, **dadurch gekennzeichnet, dass** die parallele Ladungsausgleichsschaltung (1) über mindestens eine physikalisch unterbrechbare Verbindung (4, 7, 8) mit der jeweiligen Batteriezelle (10) unterbrochen wird
